# EUROPEAN PATENT APPLICATION

(11) **EP 4 789 580 A1**
(43) Date of publication of application: **12.08.2026**
(21) Application number: 25156784.8
(22) Date of filing: 10.02.2025
(51) Int. Cl.: A46B 9/06, A46D 1/00, A46B 9/02

(54) **HEAD FOR AN ORAL CARE IMPLEMENT AND ORAL CARE IMPLEMENT**

(71) Applicant: Braun GmbH, 65824 Schwalbach am Taunus (DE)
(72) Inventor: JUNGNICKEL, Uwe, 61476 Kronberg (DE)
(74) Representative: P&G Patent Germany

(57) **Abstract**

A head for an oral care implement comprises a carrier with a mounting surface and a plurality of cleaning elements extending from the mounting surface of the head. The cleaning elements being arranged in at least two concentric simple closed curves comprising an outer closed curve and an inner closed curve. Each cleaning element of the outer curve and inner curve has a longitudinal length extension extending from the mounting surface to a free end of the cleaning element, and a cross-sectional area extending substantially perpendicular to the longitudinal extension, the cross-sectional area being elongated, having a longer axis and a shorter axis. The outer closed curve consists of a plurality of a first type of cleaning elements having an aspect ratio of the longer axis to the shorter axis of at least 2.5. An angle α measured between a tangent lying on a curvature of the outer closed curve and the longer axis of the first type of cleaning element is from about 25° to about 45°, preferably from about 30° to about 35°.

## Description

### FIELD OF THE INVENTION

The present disclosure is concerned with a head for an oral care implement, the head comprising a carrier with a mounting surface and a plurality of cleaning elements extending from the mounting surface of the head, the cleaning elements being arranged in at least two concentric simple closed curves comprising an outer closed curve and an inner closed curve, each cleaning element of the outer curve and inner curve having a longitudinal length extension extending from the mounting surface to a free end of the cleaning element, and a cross-sectional area extending substantially perpendicular to the longitudinal extension, the cross-sectional area being elongated, having a longer axis and a shorter axis. The present disclosure is further concerned with an oral care implement comprising such head.

### BACKGROUND OF THE INVENTION

Oral care implements, like manual and powered toothbrushes comprising a plurality of tufts composed of filaments are well known in the art. Generally, the tufts are attached to a mounting surface of a head intended for insertion into a user's oral cavity. A grip handle is usually attached to the head, which handle is held by the user during brushing. The head is either permanently connected or repeatedly attachable to and detachable from the handle.

Electric toothbrushes are well-known in the art, typically comprising brush heads with various tuft arrangements aimed at different brushing objectives, such as optimal cleaning, gum massage, or interdental cleaning. Users with sensitive gums or concerns about enamel abrasion often prefer soft brush heads. However, while soft brush heads are known, achieving a balance between a gentle brushing experience and effective cleaning remains a challenge. Conventional brush heads with soft bristles may compromise cleaning efficacy due to their reduced stiffness. This presents a need for an improved brush head design that combines gentleness with enhanced cleaning performance.

Tufts composed of bristles/filaments can be attached to a mounting surface of a toothbrush carrier using several methods, each method offering distinct advantages and being suited to different design needs. Well-known methods include so-called stapling and hot tufting processes.

The stapling process, also known as anchor technology, involves the use of a metal anchor or staple to secure the bristles to the brush head. During this process, bristles are bent around their center and inserted into holes in the brush head. An anchor wire or staple is then driven into the brush head, securing the bristles in place by trapping them between the anchor and the surrounding wall of the hole. This method is widely used due to its reliability and cost-effectiveness. However, the stapling method has limitations in terms of complexity of tuft shapes that can be achieved, as the bristles must be bent and grouped in a manner that accommodates the anchor and holes. In other words, the staple or anchor wire used in the stapling process imposes several limitations on the tuft configuration due to the mechanical and design constraints inherent in this method. Complex or highly varied tuft shapes are difficult to realize because the tufts need to be grouped in a way that fits the anchor configuration. Moreover, the size of the tufts is also constrained by the size of the holes and the capacity of the staple to secure a certain volume of filaments. Further, the presence of the anchor requires a minimum amount of material around each tuft hole to ensure structural integrity, which can limit how closely tufts can be placed next to each other. This requirement affects the overall density of tufts on the brush head, limiting design options for achieving optimal cleaning performance and user comfort. Also, variations in tuft configuration that require non-standard angles or positions might complicate the stapling process and increase production time and cost.

Due to these limitations, while the stapling method is reliable and cost-effective for producing standard brush heads, it can restrict the ability to provide innovative tuft configurations. Therefore, manufacturers often turn to alternative methods like hot tufting when more complex or varied tuft configurations are desired.

The hot tufting process, or anchor-free technology, involves securing the bristles without the use of a staple or anchor. Instead, bristles are typically fused together at their base through heat, forming a solid tuft that is then secured to the brush head. This can be done, e.g. by molding the brush head material around the fused bristle base. Hot tufting allows for greater flexibility in tuft designs, enabling more complex and varied tuft shapes and patterns. However, as a downside, this process is more expensive and requires more sophisticated manufacturing techniques.

It is, thus, an object of the present disclosure to provide a head for an oral care implement comprising a bristle configuration which is gentle in use, while providing superior cleaning efficacy, in particular with respect to interdental and gingival marginal regions of teeth. The head shall be provided in a cost-effective manner. It is also an object of the present disclosure to provide an oral care implement comprising such head.

### SUMMARY OF THE INVENTION

In accordance with one aspect, a head for an oral care implement is provided, the head comprising a carrier with a mounting surface and a plurality of cleaning elements extending from the mounting surface of the head, the cleaning elements being arranged in at least two concentric simple closed curves comprising an outer closed curve and an inner closed curve, each cleaning element of the outer curve and inner curve having a longitudinal length extension extending from the mounting surface to a free end of the cleaning element, and a cross-sectional area extending substantially perpendicular to the longitudinal extension, the cross-sectional area being elongated, having a longer axis and a shorter axis, wherein the outer closed curve consists of a plurality of a first type of cleaning elements having an aspect ratio of the longer axis to the shorter axis of at least 2.5, and an angle α measured between a tangent lying on a curvature of the outer closed curve and the longer axis of the first type of cleaning element is from about 25° to about 45°, preferably from about 30° to about 35°.

In accordance with one aspect, an oral care implement comprising a handle and such a head is provided, the head being permanently attached, or repeatedly attachable to and detachable from the handle.

### BRIEF DESCRIPTION OF THE DRAWINGS

The invention is described in more detail below with reference to embodiments and figures, wherein:
Fig. 1 shows a schematic view of an example embodiment of an electrically operated oral care implement comprising a head according to the present disclosure;
Fig. 2 shows a schematic view of the head of Fig. 1;
Fig. 3 shows a schematic view of an alternative example embodiment of a head for a manual oral care implement;
Fig. 4 shows a schematic top-down view on the head of Fig. 1;
Fig. 5 shows a schematic top-down view of the head of Fig. 1, depicting the dimensions of the cleaning elements according to the present disclosure;
Fig. 6 shows a schematic top-down view of the head of Fig. 1, depicting the gaps between the cleaning elements of the first type;
Fig. 7 shows a schematic elevated view of the cleaning element of the first type arranged on the head of Fig. 1;
Fig. 8 shows a schematic elevated view of the cleaning element of the second type arranged on the head of Fig. 1;
Fig. 9 shows a schematic top-down view of a second example embodiment of a head for an electrically operated oral care implement;
Fig. 10 shows a schematic top-down view of a third example embodiment of a head for an electrically operated oral care implement;
Fig. 11 shows a schematic top-down view of a fourth example embodiment of a head for an electrically operated oral care implement;
Fig. 12 shows a schematic top-down view of a fifth example embodiment of a head for an electrically operated oral care implement;
Fig. 13 shows a schematic top-down view of a sixth example embodiment of a head for an electrically operated oral care implement;
Fig. 14 depicts penetration of cleaning elements of the first type into narrow interdental spaces;
Fig. 15 depicts penetration of cleaning elements of the first type into wide interdental spaces;
Fig. 16 depicts the arrangement of cleaning elements of the head of Fig. 1 when placed on a teeth contour;
Fig. 17 shows a schematic top-down view on the carrier and tuft arrangement of the head of Fig. 1;
Fig. 18 shows a schematic perspective view of the carrier and tuft arrangement of the head of Fig. 1;
Fig. 19 shows a schematic top-down view of a comparative example embodiment of a head carrier and tuft arrangement;
Fig. 20 shows a schematic perspective view of the comparative example embodiment of Fig. 19;
Fig. 21 and 22 show diagrams in which brushing results of the head according to Figs. 17 and 18 are compared with brushing results of the head of Figs. 19 and 20.

### DETAILED DESCRIPTION OF THE INVENTION

A head for an oral care implement in accordance with the present disclosure comprises a carrier with a mounting surface. A plurality of cleaning elements is attached to the mounting surface of the head and extends therefrom in a longitudinal direction.

According to the present disclosure, an oral care implement refers to a tool or device used for maintaining oral hygiene and taking care of teeth and gums. The oral care implement may encompass various features to clean, brush, and care for teeth and soft tissue in the mouth. The oral care implement according to the present disclosure can be an electrical i.e., powered driven toothbrush, or a manual toothbrush. The head of a powered or manual oral care implement may be permanently attached to, or repeatedly attachable to and detachable from the handle.

A manual toothbrush is a traditional oral care implement comprising a handle and a brush head according to the present disclosure. A manual toothbrush requires manual movement and brushing action by the user to remove plaque, food particles, and maintain oral hygiene. A manual toothbrush according to the present disclosure targets consumers who prefer traditional toothbrush options.

A head for a manual toothbrush or a vibrating toothbrush may have a longitudinal length extension extending between a proximal end and a distal end, the distal end being opposite the proximal end, the proximal end being closest to the handle. The head of a manual toothbrush typically comprises a carrier with a mounting surface from which a number of cleaning elements according to the present disclosure extends.

A powered toothbrush, also known as an electric toothbrush, is a toothbrush that incorporates mechanical movements to assist with the brushing process. Powered toothbrushes typically feature oscillating, rotating, or vibrating brush heads, which provide additional cleaning action compared to manual brushing. They often come with built-in timers and force sensors to ensure proper brushing technique and duration. The head or toothbrush refill of a powered oral care implement, in particular of a toothbrush performing an oscillating rotational movement may comprise a carrier having a circular, elliptical or oval shape. Such bristle carrier can be driven to rotate about and to move axially along an axis of movement in an oscillating manner, wherein such axis of movement may extend substantially perpendicular to the plane defined by the upper top surface of the bristle carrier. Such rotational, oscillating motion allows the cleaning elements to penetrate into interproximal areas and hard to reach regions more easily during the rotational oscillating movement of the head. Plaque and other residues may be loosened by the oscillating action more easily as compared to a manual toothbrush.

The cleaning elements which are attached to the head/brush head according to the present disclosure are arranged in at least two concentric simple closed curves comprising an outer closed curve and an inner closed curve.

According to the present disclosure a simple closed curve is defined as a curve that is continuous, does not intersect itself, and forms a closed loop without any self-intersections or crossovers. This means that the curve does not cross over itself or have any points where it changes direction abruptly. Examples of simple closed curves include circles, ovals, ellipses, squares, and regular polygons. These curves have a clear starting and ending point and do not intersect or overlap with themselves.

Each cleaning element forming the outer curve and inner curve has a longitudinal length extension extending from the mounting surface of the head to a free end of the cleaning element. A cross-sectional area is defined as a plane extending substantially perpendicular to the longitudinal extension of the cleaning element. According to the present disclosure, the cross-sectional area is elongated and has a longer axis and a shorter axis. The shorter axis is substantially rectangular with respect to the longer axis.

According to the present disclosure, the outer closed curve consists of a plurality of a first type of cleaning element. Each of the first type of cleaning elements has an aspect ratio of the longer axis to the shorter axis of at least 2.5. For example, the aspect ratio of the longer axis to the shorter axis may be from about 2.5 to about 4, preferably from about 2.7 to about 3.1, further preferably about 2.9.

The first type of cleaning element having an aspect ratio of the longer axis to the shorter axis of at least 2.5, preferably from about 2.5 to about 4, further preferably from about 2.7 to about 3.1, even further preferably about 2.9 provides a well-balanced filament geometry: If the aspect ratio is above 4, the space required for stapling on the mounting surface will be too large to accommodate a reasonable number of bristle tufts. In other words, with a cleaning element geometry according to the present disclosure, a relatively high number of tufts can be placed on a given area on the brush head carrier. On the other side, if the aspect ratio is under 2.5, anisotropic effects in terms of stiffness diminish significantly impeding smooth adaption of the filaments to the gumline.

The inner closed curve consists of a plurality of a second type of cleaning element. Each of the second type of cleaning elements may have an aspect ratio of the longer axis to the shorter axis of at least 2. For example, the aspect ratio of the longer axis to the shorter axis may be from about 2 to about 3.

In other words, the brush head according to the present disclosure comprises an outer closed curve consisting of substantially identical cleaning elements of a first type. The outer closed curve surrounds an inner closed curved consisting of substantially identical cleaning elements of a second type. This type of cleaning element pattern can be applied on brush heads for electrically operated oral care implements, preferably rotating, oscillating toothbrushes, as well as on brush heads for manually operated oral care implements. If the oral care implement is an electrically operated oral care implements, then the head may comprise a housing, and the carrier is mounted at the housing for driven rotation or oscillating rotation around a rotation axis.
The at least two concentric closed curves may be oval-shaped and may be adapted to a substantially slightly oval-shaped carrier. According to the present disclosure, the form of the at least two concentric closed curves, e.g. having the form of a circle or oval, is defined by the center points of each cleaning element forming the respective closed curve.

According to the present disclosure, an angle α measured between a tangent lying on the curvature of the outer closed curve and the longer axis (Lₕ₁) of the first type of cleaning element is from about 25° to about 45°, preferably from about 30° to about 35°. Such arrangement provides optimal gaps between each single cleaning element. The gaps are small enough to allow for superior, effortless gliding over the teeth contour, while still being large enough to allow for sufficient bending of each single filament, thereby enabling interdental penetration and adaption of the filaments to the gumline.

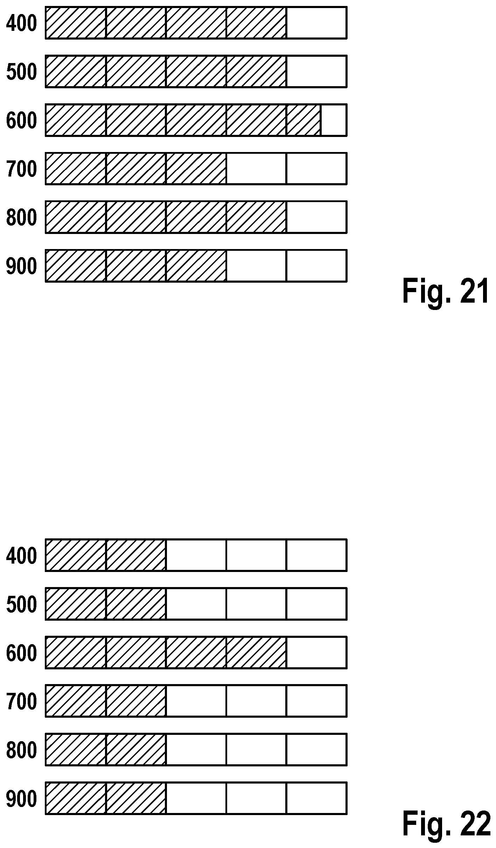

The brush head design according to the present disclosure is designed to create a brush that is perceived gentle in mouth, while delivering improved cleaning performance versus regular brush head designs consisting of an array of round/circular cleaning elements. See data discussed in relation to Figs. 21 and 22. The brush head according to the present disclosure addresses consumers who prefer a gentle brush which does not compromise on cleaning, to keep/re-obtain good oral health.

Generally, rotating/oscillating round or slightly oval brush heads are often perceived as "too harsh". According to the present disclosure, said harshness is addressed by creating continuous surfaces on the brush head topography that allows for better gliding of the cleaning elements on the teeth. The tufts/cleaning elements provide well-balanced flexibility and stability, allowing the filaments to deeply penetrate into interproximal spaces and to clean thoroughly along the gum line.

The elongated cleaning elements provide more stiffness in the direction of (an oscillatory rotational) motion (i.e. in the direction of the longer axis) and are softer towards the side (i.e. in the direction of the shorter axis) to allow for softer adaptation to the gumline. In other words, the elongated cleaning elements provide anisotropic bending stiffness during brushing, in particular if a powered toothbrush is used performing an oscillatory rotational brushing motion around a rotation axis. The cleaning elements/filaments can more easily penetrate interdental areas and adapt smoothly to different tooth spacings, thereby delivering superior cleaning performance, while being able to adapt to the gum line.

The head according to the present disclosure may comprise from 10 to 14 cleaning elements of the first type, preferably 12 cleaning elements of the first type on the outer closed curve, and from 8 to 12 cleaning elements of the second type, preferably 10 cleaning elements of the second type on the inner closed curve. The cleaning elements may be tufts composed of a plurality of filaments/bristles. The filaments/bristles used in connection with powered oral care implements may have a diameter of about 4 mil (0,1016 mm) and/or 5 mil (0,127mm), while filaments used in connection with manual oral care implements/toothbrushes may have a larger diameter, e.g. 6 mil (0,1524 mm), 7 mil (0,1778 mm) and/or 8 mil (0,2032 mm).

In consumer tests, a brush head according to the present disclosure was compared with a brush head design composed of traditional circular tufts only. The same type of filaments was used in both brush heads. Surprisingly, it was found out that the head according to the present disclosure provides a significantly better and effortless clean. The head according to the present disclosure was perceived as providing much better gliding effects of the tufts along the teeth. The bristles/filaments of the brush head according to the present disclosure appeared softer and more flexible, allowing them to better adapt to the gumline and interdental areas. See test results discussed below and depicted in the Figures.

The unique brush design according to the present disclosure offers a distinct sensory experience, making brushing more pleasant, thereby encouraging longer and more frequent brushing sessions.

The sum of the lengths of the longer axes (∑Lₕ₁) of the plurality of first type of cleaning elements arranged on the outer closed curve may be larger/longer than the overall length of the outer closed curve, the shape and length of the outer closed curve being defined by the center-points of each cleaning element forming the outer closed curve.

Such arrangement of cleaning elements combines further the benefits of a continuous ring with the benefits of a segmented ring being composed of a number of single tufts. Placing elongated elements on the outer closed curve/ring, and slightly angling the cleaning elements versus the tangential to the direction of cleaning allows to bring the ends of neighboring cleaning elements much closer together to avoid noticeable gaps. Thereby, more filaments than on a continuous closed curve/ring can be arranged to increase cleaning performance.

The bristle field/pattern of cleaning elements according to the present disclosure can be deployed and integrated on both, on brush heads for electrically operated oral care implements performing a rotating/oscillating motion around a rotation axis, and on manual oral care implements/toothbrushes, and thus, can serve as a signature element, providing users with a signal that specific oral care implements come from a specific source or company, and stand for a specific quality. Further, users which typically use manual oral care implements/toothbrushes become familiar with circular/round brush head patterns which may drive conversion from manual to powered toothbrushes, thereby increasing overall brushing compliance and oral health of consumers.

An angel β measured between two center lines, each center line tangentially touching an outer contour of two adjacent ends of neighboring first type cleaning elements, respectively, the center lines crossing each other in the center point of the outer closed curve, may be less than 5°, preferably from about 1° to about 3°.

Typical stapling technologies require a certain minimum distance between the cleaning elements to accommodate the staples/anchor wires on the mounting surface of the brush head. Typical spacings between tufts range from about 0.6 mm to about 0.7 mm, which, however, impedes sufficient gliding of the cleaning elements on the tooth surfaces. Instead, the cleaning elements flex and bend in the direction of motion. On the other hand, a continuous ring of filaments, that can be created by, e.g. hot tufting technology, would provide continuous gliding effects, but would negatively affect the flexibility of filaments, preventing smooth adaption to teeth contours and hard-to-reach areas. A brush head according to the present disclosure balances the need for continuous gliding effects with the need for flexibility. With the newly proposed spacing between each cleaning element in the direction of movement, the cleaning elements have the maximum flexibility for gentleness and adaptability, while providing sufficient gliding effects.

The/each second type of cleaning element may be arranged in a manner that its longer axis is substantially parallel to a center line running through the center point of the inner closed curve, wherein a distance measured from said center line to an outer contour of the second type of cleaning element adjacent to the center line is less than the length of the shorter axis of the second type of cleaning element. Such arrangement of the cleaning elements on the inner closed curve provides less gliding effects, but more bending, to increase scrubbing and scraping effects on the tooth surfaces. As the inner cleaning elements/tufts are usually not in direct contact with the gums, the stronger scraping effects on the teeth may have no negative impact on the soft tissue in the mouth. While superior gliding effects of the cleaning elements/tufts on the outer closed curve provide a gentle sensory perception protecting the gums, avoiding a stinging sensation or unpleasant feeling on the gums during brushing, the cleaning elements/tufts on the inner closed curve provide thorough cleaning effects by scrubbing.

The first type of cleaning element and the second type of cleaning element may be tufts composed of a plurality of filaments. The tufts may be so-called "stapled tufts" attached to the carrier of the head by means of a stapling process. According to such stapling process, also known as an anchor tufting method, the carrier of the head is provided with at least one tuft hole, e.g. a blind-end bore. A tuft comprising a plurality of filaments is fixed/anchored in said tuft hole by means of a staple/anchor. This means, that the filaments of the tuft are bent/folded around the staple/anchor, for example made of metal, in a substantially U-shaped manner. The filaments together with the anchor are pushed into the tuft hole so that the anchor penetrates into opposing side walls of the tuft hole thereby anchoring/fixing/fastening the filaments to the bristle carrier. The anchor may be fixed in opposing side walls by positive and frictional engagement. In case the tuft hole is a blind-end bore, the anchor holds the filaments against a bottom of the bore. In other words, the anchor may lie over the U-shaped bend in a substantially perpendicular manner. Since the filaments of the tuft are bent around the anchor in a substantially U-shaped configuration, a first limb and a second limb of each filament extend from the bristle carrier in a filament direction. Heads for oral care implements which are manufactured by a stapling process can be provided in a relatively low-cost and time-efficient manner. At the same time, a number of different types of filaments can be deployed, without compromising simplicity of manufacturing processes. Such different filament types which can be combined in one bristle field/pattern by a stapling process may include standard filaments with end-rounded filament tips, tapered filaments, crimped filaments, flagged filaments with spliced filament tips, cross-shaped or multi-edged filaments, textured filaments, for example with a dimpled or grooved pattern and filaments being composed of different type of materials, e.g. core-sheath-type of filaments. Further, a number of different filament thicknesses, e.g. 4 mil (0,1016 mm), 5 mil (0,127mm) or 6 mil (0,1524 mm), or any other mil/mm thickness, can be used in one bristle field/pattern without creating significant manufacturing complexities. These filament types can be used individually or in combination to create brush heads tailored to specific cleaning needs and user preferences, all while utilizing the reliable and cost-effective stapling process.

The length extension of the cleaning elements of the first type may be longer than the length extension of the cleaning elements of the second type, so that the at least two concentric closed curves form a prophy cup-like structure. For example, for a powered driven toothbrush the cleaning elements of the first type may have a length extension of from about 8.0 mm to about 8.5 mm, preferably about 8.3 mm. The cleaning elements of the second type may have a length extension of from about 7.0 mm to about 7.5 mm, preferably about 7.2 mm.

A prophy-like cup structure, characterized by a wall of longer cleaning elements surrounding an inner area of shorter cleaning elements, offers several benefits in dental care, particularly in the context of electric toothbrushes: For example, the prophy cup-like design helps retain toothpaste within the cleaning element/bristle arrangement, reducing the likelihood of it being spread around during brushing. This ensures that more of toothpaste is held in place and the active ingredients are better delivered to the teeth and gums. The containment of toothpaste within the cup-like structure minimizes splattering, leading to a cleaner brushing experience. This is particularly beneficial for users who prefer brushing outside the bathroom or for children who may struggle with cleanliness. The longer tufts act as a barrier that guides the toothpaste and saliva mixture towards the shorter tufts, maximizing contact with the tooth surfaces and enhancing the cleaning action. Further, the longer lengths of the outer cleaning elements/tufts can provide a massaging effect on the gums, promoting circulation and gum health without excessive pressure that could cause irritation. Moreover, the prophy cup-like structure allows the longer tufts to reach even more easily into interdental spaces, while the shorter inner cleaning elements/tufts focus on cleaning the tooth surface, thereby providing comprehensive oral care.

The difference in length extension between the cleaning elements of the first type and the cleaning elements of the second type may be from about 0.6 mm to about 1.6 mm, preferably from about 1.0 mm to about 1.2 mm, more preferably about 1.1. mm. The cleaning element/tuft length difference in a prophy cup-like structure is a critical factor in balancing effective cleaning with user comfort and efficiency, particularly in electric toothbrushes that perform an oscillating, rotating brushing action. Many electric toothbrushes are equipped with pressure sensors to alert users when too much brushing force is applied. Typically, the alert is set at 2.5N to prevent users from applying too much pressure which may cause gum irritation and recession. The tuft length difference is designed to align with these needs. With a tuft length difference of about 0.6 mm to about 1.6 mm, preferably from about 1.0 mm to about 1.2 mm, and more preferably about 1.1 mm, the design ensures that when a recommended brushing force of about 2.5N is applied, the inner shorter cleaning elements/tufts remain in contact with the surfaces of teeth and gums, while the outer longer cleaning elements can adequately flex to adapt to the contours of the teeth and gums, allowing for more effective brushing along the gumline and interdental spaces.

If the cleaning element/tuft length difference is too high, the shorter inner tufts may not adequately contact the teeth surfaces anymore, in particular if an electrical toothbrush is used with a recommended standard brushing force of 2.5N. This can compromise cleaning efficacy. The specified range according to the present disclosure ensures that the shorter tufts still effectively engage with the tooth surface, enhancing cleaning performance. At the same time, excessive pressure on the gums by the longer cleaning elements is avoided, otherwise leading to discomfort or damage. The inner shorter tufts engage the tooth surface, while the outer longer tufts provide a massaging action, promoting gum health. With a carefully chosen length difference, the risk of longer tufts exerting excessive force on the gum line is minimized. This reduces the chance of gum damage and ensures that the toothbrush can be used safely with the recommended force. On the other side, if the length difference is too small, the ability to retain toothpaste diminishes, and the longer cleaning elements show reduced cleaning efficacy along the gum line.

The following is a non-limiting discussion of example embodiments of a head for an oral care implement in accordance with the present disclosure, where reference to the Figures is made.

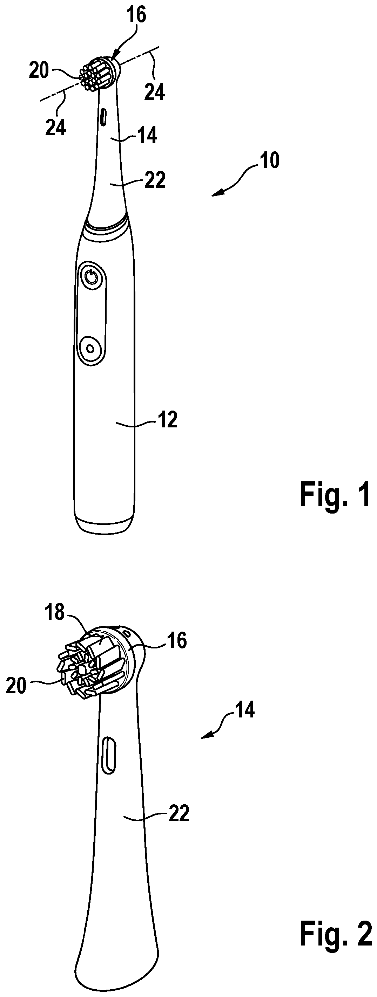

Figs. 1 shows an embodiment of an oral care implement 10, in the present case an electrically operated/powered toothbrush 10 comprising a handle 12 and a head 14, the head 14 being repeatedly attachable to and detachable from the handle 12.

The head 14 comprises a housing 22 and a carrier 16 with a mounting surface 18 from which a plurality of cleaning elements 20 extend. The carrier 16 is mounted at the housing 22 for driven oscillating-rotational motion around a rotation axis 24 that extends through a center point on the mounting surface 18 of the carrier 16. The head 14 in a non-attached state is shown in Fig. 2. The handle 12 as shown in Fig. 1 can be attached to head 14 via a drive shaft which may be coupled to a motion transmitter located within the housing 22.

The cleaning elements 20 arranged on the mounting surface 18 of head 14 are tufts 20 composed of a plurality of filaments. The tufts of filaments 20 may be attached to the carrier 16 by means of a stapling process.

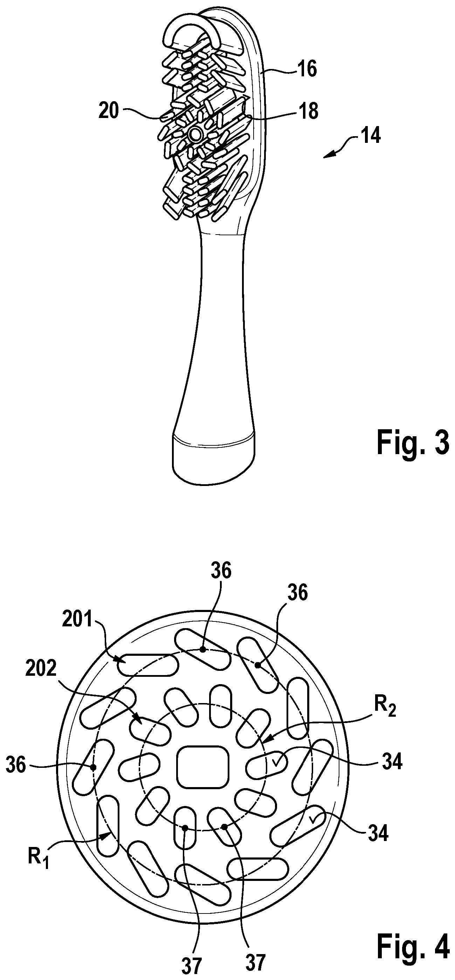

An alternative example embodiment of a head 14 according to the present disclosure is shown in Fig. 3. The head 14 of Fig. 3 is a head for a manual oral care implement. The head may be repeatedly attachable to and detachable from a manual oral care handle. The handle may be a typical manual handle, or may be a handle performing a vibrating action. Again, the head 14 for a manual oral care implement comprises a carrier 16, in the present case elongated, with a mounting surface 18 to which a plurality of cleaning elements 20 are attached in accordance with the present disclosure.

Figures 4 to 6 show a schematic top-down view on the carrier 16 of the head 14 of Fig. 1. The cleaning elements/tufts 20 are arranged in at least two concentric simple closed curves R₁, R₂, comprising an outer closed curve R₁ and an inner closed curve R₂. The bristle carrier 16 as well as the outer and inner closed curves R₁, R₂ may be circular, oval or elliptical. In the present case, the bristle carrier 16 as well as the outer and inner closed curves R₁, R_{2 a} are slightly oval with a shorter axis and longer axis. The length of the shorter axis 26 of the outer closed curve R₁ may be about 10.0 mm to 10.5 mm, preferably about 10.3 mm, and the length of the longer axis 28 may be between 11.0 mm to about 11.5 mm, preferably about 11.2 mm.

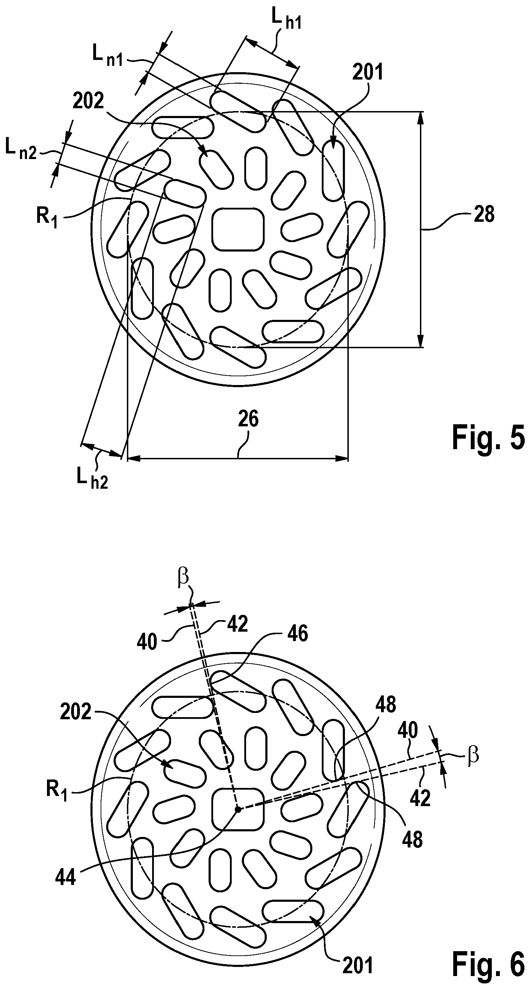

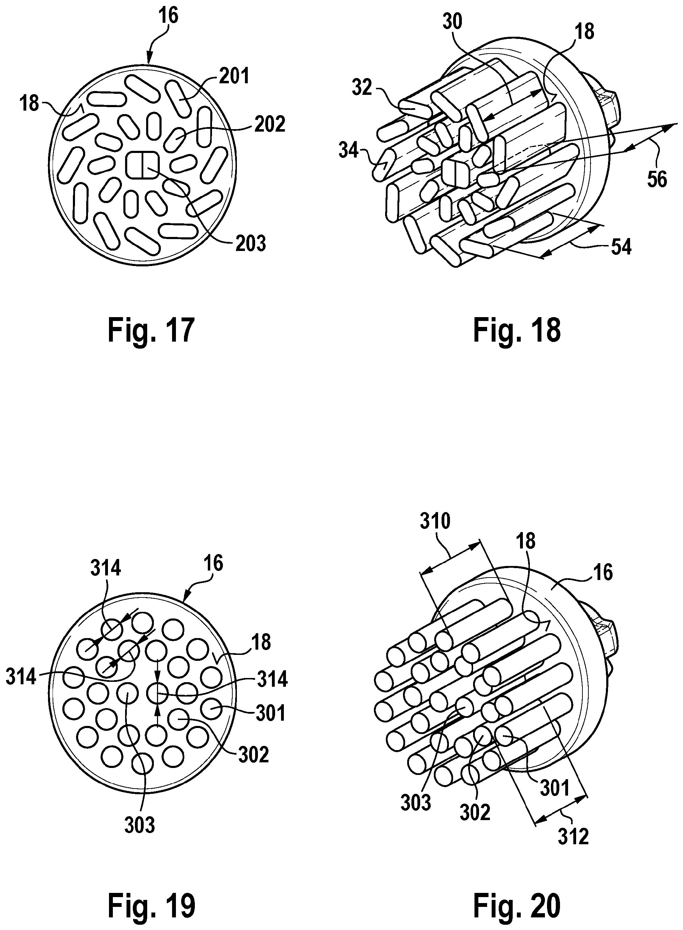

Each cleaning element of the outer curve R₁ and inner curve R₂ has a longitudinal length extension 30 extending from the mounting surface 18 to a free end 32 of the cleaning element 20 (see Figure 18). A cross-sectional area 34 extends substantially perpendicular to the longitudinal extension 30. As further shown in Fig. 5, the cross-sectional area 34 is elongated, having a longer axis Lₕ₁, Lₕ₂ and a shorter axis Lₙ₁, Lₙ₂. The outer closed curve R₁ consists of a plurality of a first type of cleaning element 201 having an aspect ratio of the longer axis Lₕ₁ to the shorter axis Lₙ₁ of at least 2.5. The aspect ratio of the longer axis Lₕ₁ to the shorter axis Lₙ₁ may be from about 2.5 to about 4, preferably from about 2.7 to about 3.1, further preferably about 2.9. The inner closed curve R₂ consists of a plurality of a second type of cleaning element 202 which may have an aspect ratio of the longer axis Lₕ₂ to the shorter axis Lₙ₂ of at least 2. The aspect ratio of the longer axis Lₕ₂ to the shorter axis Lₙ₂ may be from about 2 to about 3.

The sum of the lengths of the longer axes ∑Lₕ₁ of the plurality of first type of cleaning elements 201 arranged on the outer closed curve R₁ may be larger than the length of the outer closed curve R₁. The length of the outer closed curve R₁ is defined by the center-points 36 of each cleaning element of the first type 201 forming the outer closed curve R₁. Likewise, the inner closed curve R₂ is defined by the center-points 37 of each cleaning element of the second type 202 forming the inner closed curve R₂. The center points 36, 37 of the cleaning elements of the first and second type 201, 202 form slightly oval-shaped outer and inner closed curves R₁, R₂. For example, the circumferential length of the outer closed curve R₁ may be about 33.5 mm to about 34 mm, while the sum of the lengths of the longer axes ∑Lₕ₁ of the plurality of first type of cleaning elements 201 may be from about 34.5 mm to about 35 mm.

As further depicted in Figures 5, 6 and 7, the cleaning elements of the first type 201 are arranged on the mounting surface 18 of the carrier 16 in an angled manner. This means that the cleaning elements of the first type 201 are arranged in a way that an angle α between a tangent 38 lying on a curvature of the outer closed curve R₁ and the longer axis Lₕ₁ is defined. The angle α is from about 25° to about 45°, preferably from about 30° to about 35°.

As illustrated in Fig. 6, a specific distance between each cleaning element of the first type 201 is provided. This distance is defined by an angel β measured between two center lines 40, 42, each center line 40, 42 tangentially touching an outer contour 46 of two adjacent ends 48 of neighboring first type cleaning elements 201, respectively. The center lines 40, 42 are crossing each other in the center point 44 of the outer closed curve R₁. Angel β may be less than 5°, preferably from about 1° to about 5°, further preferably from about 1° to about 3°.

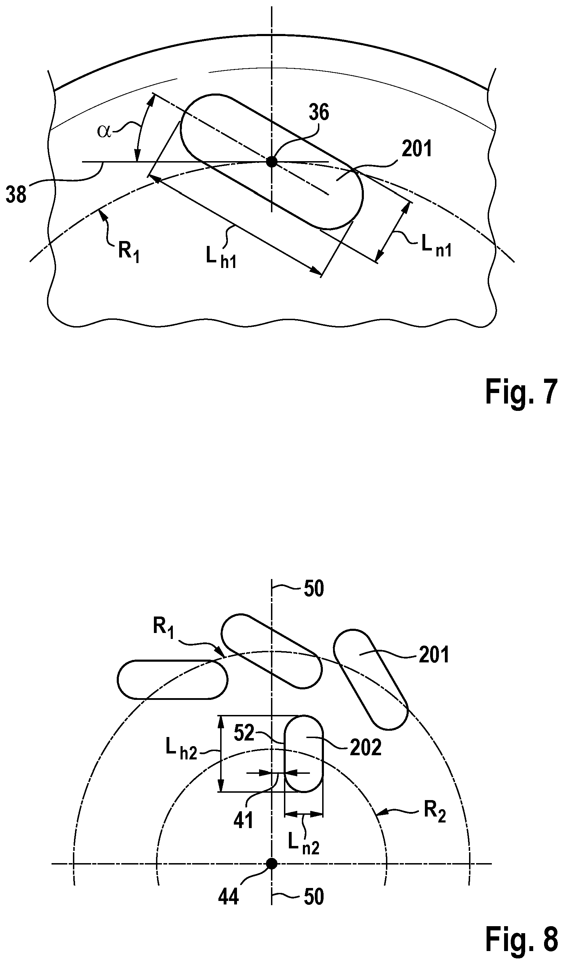

As shown in Fig. 8, the second type of cleaning elements 202 may be arranged on the inner closed curve R₂ in a manner that the longer axis Lₕ₂ is substantially parallel to a center line 50 running through the center point 44 of the inner closed curve R₂, and a distance 41 measured from said center line 50 to an outer contour 52 of the second type of cleaning element 202 which is adjacent to the center line 50 is less than the length of the shorter axis Lₙ₂ of the second type of cleaning element 202.

As derivable from Figs. 2 and 18, the length extension 54 of the cleaning elements of the first type 201 may be longer than the length extension 56 of the cleaning elements of the second type 202 so that the two concentric closed curves R₁, R₂ form a prophy cup-like structure. The difference in length extension may be from about 0.6 mm to about 1.6 mm, preferably from about 1.0 mm to about 1.2 mm, more preferably about 1.1. mm.

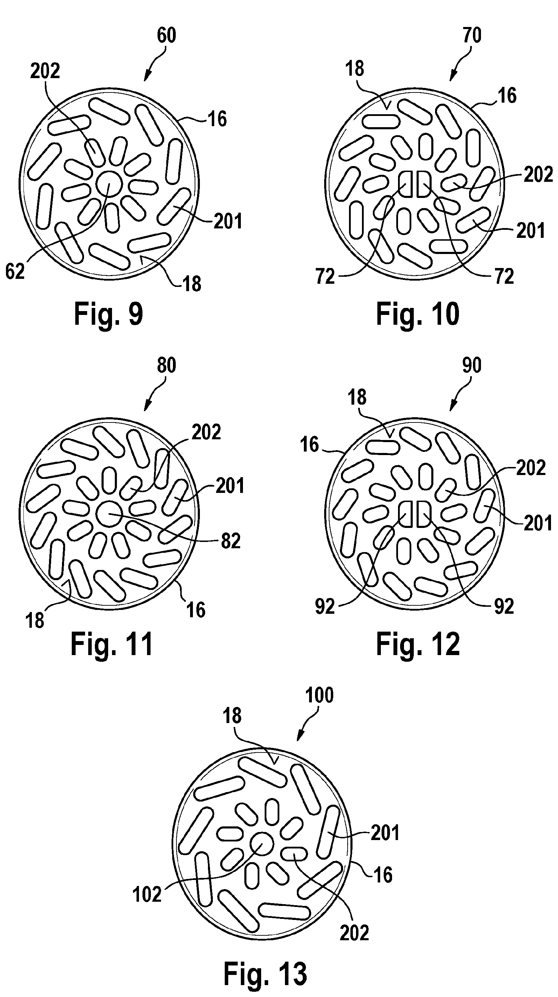

Figs. 9 to 13 show alternative brush head embodiments for electrically operated oral care implements 10 in accordance with the present disclosure. Fig. 9 shows a second embodiment of a head 60 arranged at the housing 22 for driven oscillating-rotational motion. The head 60 comprises a carrier 16 with a mounting surface 18 from which 10 cleaning elements of the first type 201 and nine cleaning elements of the second type 202 extend. The cleaning elements 201 and 202 are stapled tufts composed of a plurality of filaments. The tufts 201, 202 are arranged on the outer and inner closed curves R₁, R₂, respectively, in the same manner as described above. In the center of the tuft pattern, a single center tuft 62 is arranged, surrounded by the tufts 201, 202 of the outer and inner closed curves R₁, R₂

Fig. 10 shows a third embodiment of a head 70 arranged at the housing 22 for driven oscillating-rotational motion. The head 70 comprises a carrier 16 with a mounting surface 18 from which 12 cleaning elements of the first type 201 and 10 cleaning elements of the second type 202 extend. The cleaning elements 201 and 202 are stapled tufts composed of a plurality of filaments. The tufts 201, 202 are arranged on the outer and inner closed curves R₁, R₂, respectively, in the same manner as described above. In the center of the tuft pattern, two center tufts 72 are arranged, surrounded by the tufts 201, 202 of the outer and inner closed curves R₁, R₂.

Fig. 11 shows a fourth embodiment of a head 80 arranged at the housing 22 for driven oscillating-rotational motion. The head 80 comprises a carrier 16 with a mounting surface 18 from which 14 cleaning elements of the first type 201 and nine cleaning elements of the second type 202 extend. The cleaning elements 201 and 202 are stapled tufts composed of a plurality of filaments. The tufts 201, 202 are arranged on the outer and inner closed curves R₁, R₂, respectively, in the same manner as described above. In the center of the tuft pattern, a single center tuft 82 is arranged, surrounded by the tufts 201, 202 of the outer and inner closed curves R₁, R₂.

Fig. 12 shows a fifth embodiment of a head 90 arranged at the housing 22 for driven oscillating-rotational motion. The head 90 comprises a carrier 16 with a mounting surface 18 from which 13 cleaning elements of the first type 201 and 10 cleaning elements of the second type 202 extend. The cleaning elements 201 and 202 are stapled tufts composed of a plurality of filaments. The tufts 201, 202 are arranged on the outer and inner closed curves R₁, R₂, respectively, in the same manner as described above. In the center of the tuft pattern, two center tufts 92 are arranged, surrounded by the tufts 201, 202 of the outer and inner closed curves R₁, R₂.

Fig. 13 shows a sixth embodiment of a head 100 arranged at the housing 22 for driven oscillating-rotational motion. The head 100 comprises a carrier 16 with a mounting surface 18 from which nine cleaning elements of the first type 201 and eight cleaning elements of the second type 202 extend. The cleaning elements 201 and 202 are stapled tufts composed of a plurality of filaments. The tufts 201, 202 are arranged on the outer and inner closed curves R₁, R₂, respectively, in the same manner as described above. In the center of the tuft pattern, a single center tuft 202 is arranged, surrounded by the tufts 201, 202 of the outer and inner closed curves R₁, R₂

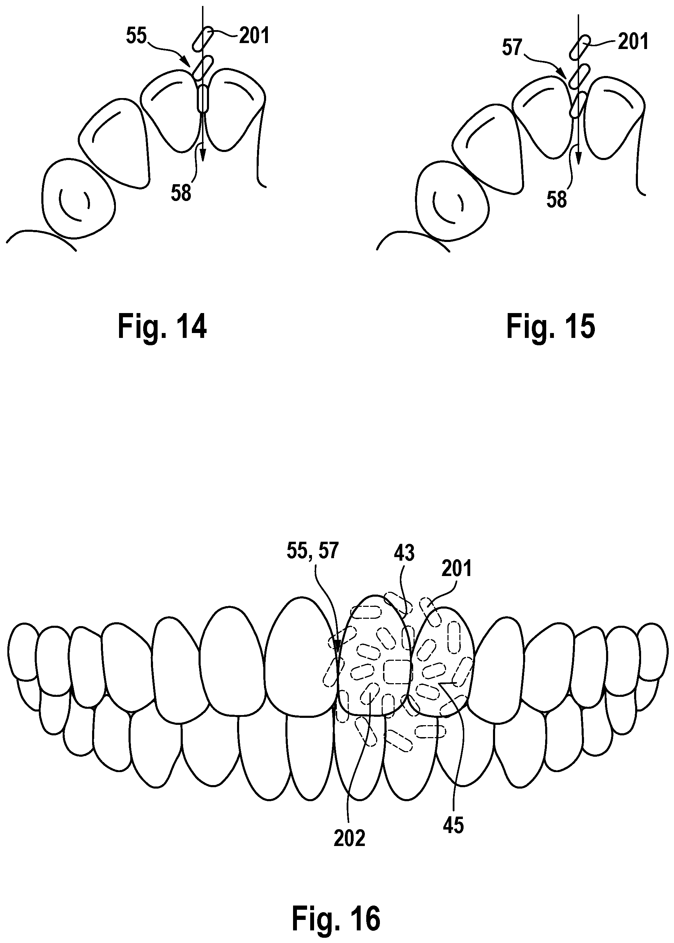

Figs. 14 and 15 illustrate how the angled tufts of the first type 201 penetrate deeply narrow interdental spaces 55 (see Fig. 14) as well wide interdental spaces 57 (see Fig. 15) in the direction of movement 58 during brushing. Fig. 16 illustrates how the tufts 201 of the outer closed cure R₁ adapt to the contour of the gumline 43 and interdental spaces despite of the width, thereby thoroughly cleaning these areas. At the same time the tufts 202 of the inner closed curve R₂ thoroughly clean the flat surfaces 45 of the teeth.

### COMPARISON EXPERIMENTS

In consumer expert tests a head of an oral care implement according to Figs. 17 and 18, and in accordance with the present disclosure (example embodiment 1) as well as a head of a comparative example embodiment according to Figs. 19 and 20 were compared with respect to perceived brushing experience, including: Gliding behavior, cupping, interdental clean, softness & flexibility, effortless brushing experience, and perceived brush seize during brushing.

The tuft pattern of example embodiment 1 is shown in Figs. 17 and 18, and the tuft and filament characteristics are listed in Table 1.

**Table 1**

| |
|---|
| Number of tufts of the first type 201 on the outer closed curve: 12 |
| Aspect ratio Lₕ₁, Lₙ₁: 2.9 |
| Lₕ₁: 2.9 mm |
| Lₙ₁: 1.0 mm |
| α: 33° |
| β: 1.9° to 2.9° |
| Length 54 of tuft 201: 8.3 mm |
| Type of filaments of tufts 201: standard circular filaments, 5mil |
| Number of tufts of the second type 202 on the inner closed curve: 10 |
| Aspect ratio Lₕ₂, Lₙ₂: 2 |
| Lₕ₂: 2.0 mm |
| Lₙ₂: 1.0 mm |
| µ: 1° |
| Length 56 of tuft 202: 7.2 mm |
| Type of filaments of tufts 202: standard circular filaments, 5mil |
| Number of center tufts 203: two |
| Length 56 of tuft 203: 7.2 mm |
| Type of filaments of tuft 203: standard circular filaments, 5mil |

The tuft pattern of the comparative example embodiment is shown in Figs. 19 and 20, and the tuft and filament characteristics are listed in Table 2.

**Table 2**

| |
|---|
| Number of tufts 301 on the outer closed curve: 14 |
| Diameter 314 of tuft 301: 1.5 mm |
| Length 310 of tuft 301: 8.3 mm |
| Type of filaments of tufts 301: standard circular filaments, 5mil |
| Number of tufts 302 on the inner closed curve: 10 |
| Diameter 314 of tuft 302: 1.5 mm |
| Length 312 of tuft 302: 7.2 mm |
| Type of filaments of tufts 302: standard circular filaments, 5mil |
| Number of center tufts 303: two |
| Diameter 314 of center tuft 303: 1.5 mm |
| Length 312 of tuft 303: 7.2 mm |
| Type of filaments of tuft 303: standard circular filaments, 5mil |

Surprisingly, the consumer tests revealed that example embodiment 1 in accordance with the present disclosure provides significantly better and effortless clean, while better gliding along the teeth as compared to the comparative example embodiment. Although the brush according to example embodiment 1 and the brush according to the comparative example embodiment contained the same number of filaments, the brush according to example embodiment 1 appeared softer and more flexible, allowing the filaments to better adapt to the gumline and interdental spaces.

Fig. 21 (data for example embodiment 1) and Fig. 22 (data for the comparative example embodiment) show diagrams in which the brushing results of the head according example embodiment 1 are compared with the brushing results of the head according to the comparative example embodiment. Figs. 21 and 22 clearly show that the head according to example embodiment 1 provides superior sensory effects over the head according to the comparative example embodiment in terms of: Gliding 400, cupping (indicating how well a tooth is enclosed by tufts during brushing) 500, interdental clean 600, softness & flexibility 700, effortless 800 and perceived brush seize 900.

The brush head according to example embodiment 1 is adapted to create a brush that is perceived as gentle in mouth, while delivering improved cleaning performance versus regular brush head designs performing an oscillatory rotational motion. The head and tuft configuration addresses the dilemma of consumers demanding a gentle brush but who do not want to make a compromise on cleaning, to keep/re-obtain good oral health. In particular rotating/oscillating round brush heads are often perceived as "too harsh" by consumers. According to the present disclosure, said harshness is addressed by creating continuous surfaces on the brush head topography that allows for gliding of the tufts on the teeth. By placing elongated cleaning elements/tufts on an outer closed curve, slightly angled versus the tangential to the direction of cleaning, allows to bring the ends of neighboring cleaning elements much closer together, thereby avoiding noticeable gaps. More filaments than on a continuous closed curve of the same diameter can be arranged to increase cleaning performance, because the sum of the lengths of the longer axes of all cleaning elements of the first type is greater than the circumferential length of the overall outer closed curve.

The elongated cleaning elements of the first type provide more stiffness in the direction of motion (direction of Lₕ₁) and are softer towards the side (direction of Lₙ₁) to allow softer adaptation to the gumline. The filaments can then more easily penetrate interdental areas and adapt smoothly to different tooth spacings delivering superior cleaning performance. Also, the filaments adapt to the gum line in a better and smoother manner. The cleaning elements of the second type perform a more thorough cleaning action on the flat tooth surfaces through scrubbing.

In the context of this disclosure, the term "substantially" refers to an arrangement of elements or features that, while in theory would be expected to exhibit exact correspondence or behavior, may, in practice embody something slightly less than exact. As such, the term denotes the degree by which a quantitative value, measurement or other related representation may vary from a stated reference without resulting in a change in the basic function of the subject matter at issue.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A head (14, 60, 70, 80, 90, 100) for an oral care implement (10), the head (14, 60, 70, 80, 90, 100) comprising a carrier (16) with a mounting surface (18) and a plurality of cleaning elements (20, 201, 202) extending from the mounting surface (18) of the head (14, 60, 70, 80, 90, 100),
the cleaning elements (20, 201, 202) being arranged in at least two concentric simple closed curves (R₁, R₂) comprising an outer closed curve (R₁) and an inner closed curve (R₂), each cleaning element (20, 201, 202) of the outer closed curve (Ri) and inner closed curve (R₂) having a longitudinal length extension (54, 56) extending from the mounting surface (18) to a free end (32) of the cleaning element (20, 201, 202), and a cross-sectional area (34) extending substantially perpendicular to the longitudinal extension (54, 56), the cross-sectional area (34) being elongated, having a longer axis (Lₕ₁, Lₕ₂) and a shorter axis (Lₙ₁, Lₙ₂), wherein
the outer closed curve (Ri) consists of a plurality of a first type of cleaning elements (201) having an aspect ratio of the longer axis (Lₕ₁) to the shorter axis (Lₙ₁) of at least 2.5, and an angle α measured between a tangent (38) lying on a curvature of the outer closed curve (Ri) and the longer axis (Lₕ₁) of the first type of cleaning element (201) is from about 25° to about 45°, preferably from about 30° to about 35°.

2. A head (14, 60, 70, 80, 90, 100) according to claim 1, wherein the sum of the lengths of the longer axes (∑Lₕ₁) of the plurality of first type of cleaning elements (201) is larger than the length of the outer closed curve (Ri), the length of the outer closed curve (Ri) being defined by the center-points (36) of each cleaning element (201) arranged on the outer closed curve (Ri).

3. A head (14, 60, 70, 80, 90, 100) according to any of the preceding claims, wherein the inner closed curve (R₂) consists of a plurality of a second type of cleaning elements (202) having an aspect ratio of the longer axis (Lₕ₂) to the shorter axis (Lₙ₂) of at least 2.

4. A head (14, 60, 70, 80, 90, 100) according to any of the preceding claims, wherein the cleaning elements of the first type (201) have an aspect ratio of the longer axis (Lₕ₁) to the shorter axis (Lₙ₁) of from about 2.5 to about 4, preferably from about 2.7 to about 3.1, further preferably about 2.9.

5. A head (14, 60, 70, 80, 90, 100) according to any of the preceding claims, wherein the cleaning elements of the second type (202) have an aspect ratio of the longer axis (Lₕ₂) to the shorter axis (Lₙ₂) of from about 2 to about 3.

6. A head (14, 60, 70, 80, 90, 100) according to any of the preceding claims, wherein an angel β measured between two center lines (40, 42), each center line (40, 42) tangentially touching an outer contour (46) of two adjacent ends (48) of neighboring first type cleaning elements (201), respectively, and the center lines (40, 42) crossing each other in the center point (44) of the outer closed curve (Ri), is less than 5°, preferably from about 1° to about 3°.

7. A head (14, 60, 70, 80, 90, 100) according to any of the preceding claims, wherein the second type of cleaning element (202) is arranged in a manner that its longer axis (Lₕ₂) is substantially parallel to a center line (50) running through the center point (44) of the inner closed curve (R₂), and a distance (41) measured from said center line (50) to an outer contour (52) of the second type of cleaning element (202) adjacent to the center line (50) is less than the length of the shorter axis (Lₙ₂) of the second type of cleaning element (202).

8. A head (14, 60, 70, 80, 90, 100) according to any of the preceding claims, wherein the first type of cleaning elements (201) and the second type of cleaning elements (202) are tufts (201, 202) composed of a plurality of filaments, the tufts (201, 202) being stapled tufts (201, 202) attached to the carrier (16) by means of a stapling process.

9. A head 14, 60, 70, 80, 90, 100) according to any of the preceding claims, wherein the at least two concentric closed curves (R₁, R₂) are oval-shaped.

10. A head (14, 60, 70, 80, 90, 100) according to any of the preceding claims, wherein the length extension (54) of the cleaning elements of the first type (201) is longer than the length extension (56) of the cleaning elements of the second type (202).

11. A head (14, 60, 70, 80, 90, 100) according to claim 10, wherein the difference in length extension is from about 0.6 mm to about 1.6 mm, preferably from about 1.0 mm to about 1.2 mm, more preferably about 1.1. mm.

12. A head (14, 60, 70, 80, 90, 100) according to any of the preceding claims, wherein the at least two concentric closed curves (R₁, R₂) form a prophy cup-like structure.

13. A head (14, 60, 70, 80, 90, 100) according to any of the preceding claims, wherein the head (14, 60, 70, 80, 90, 100) comprises a housing (22), and the carrier (16) is mounted at the housing (22) for driven rotation or oscillating rotation around a rotation axis (24).

14. An oral care implement (10) comprising a handle (12) and a head (14, 60, 70, 80, 90, 100) according to any of the preceding claims.

15. An oral care implement (10) according to claim 14, wherein the head (14, 60, 70, 80, 90, 100) is permanently attached to, or repeatedly attachable to and detachable from the handle (12), the oral care implement (10) preferably being an electrically operated oral care implement (10).
